# EUROPEAN PATENT SPECIFICATION

(11) **EP 3 386 317 B1**
(45) Date of publication and mention of the grant of the patent: **09.10.2019**
(21) Application number: 16788141.6
(22) Date of filing: 31.10.2016
(51) Int. Cl.: A23L 5/30, A23L 27/22, A23L 33/21, A23P 10/28, A23L 23/10, A23L 7/10

(54) **CULINARY SEASONING OR BOUILLON TABLET**
KULINARISCHE WÜRZ- ODER BRÜHETABLETTE
TABLETTE DE BOUILLON OU D'ASSAISONNEMENT CULINAIRE

(30) Priority: 10.12.2015 EP 15199093
(43) Date of publication of application: 17.10.2018
(73) Proprietor: Société des Produits Nestlé S.A., 1800 Vevey (CH)
(72) Inventor: HABEYCH NARVAEZ, Edwin Alberto, 1010, Lausanne (CH); GALAFFU, Nicola, 01210 Ornex (FR); MICHEL, Martin, 1010 Lausanne (CH)
(74) Representative: Mollet, Beat Max
(86) International application number: PCT/EP2016/076211
(87) International publication number: WO 2017/097499

(56) References cited:
- EP-A1- 1 820 409
- DATABASE GNPD [Online] MINTEL; August 2007 (2007-08), Anonymous: "Stock Cubes", XP002757763, Database accession no. 750149

## Description

The present invention relates to a seasoning or bouillon tablet used as cooking aid for the preparation of culinary food products.

Culinary seasoning or bouillon tablets are well known cooking aids in the western as well as non-western cuisine. They are typically made from more or less dry ingredients such as dehydrated vegetables, meat stock, salt, oil or fat, herbs and spices, and sometimes also comprise taste enhancers such as monosodium glutamate salts or yeast extract. A dry mixture of these ingredients is then typically pressed into small cubes or tablets with the help of a pressing machine.

Cubes or tablets obtained by this process usually have a certain stable hardness which allows to individually wrap-package them, and to ship and distribute them in the trade. Consumers then unpack an individual cube or tablet and typically break them up between the fingers before adding them to a dish or cooking pot. By squeezing the tablets between the fingers, the tablets then tend to crumble into lumps, small particles or powder. This is an important advantage as good crumbling into a relatively fine powder or particles allows to better disperse the ingredients of the cube or tablet into a cooking dish. There is better and faster simultaneous dissolution of the ingredients in the dish, sauce, water or in the pan. Even though some commercially available tablets are fairly easy to crumble between fingers, many tablets on the market are quite hard and need quite some effort from the consumers to be broken up. This is due to the fact that the hardness of pressed tablets or cubes tends to increase over time. This phenomenon, also named as post-hardening, is mainly due to bridges formed by sintering between amorphous particles (e.g. the culinary flavouring compounds) and bridges formed by dissolution/re-crystallization of crystalline particles such as e.g. the salts.

Hence, there is still a need in the art and the food industry to find solutions on how to provide consumers with culinary seasoning or bouillon tablets that are hard enough to be handled as tablets, that are shelf-stable and can be kept relatively long before use, but that also relatively easily crumble into a fine powder or particles when squeezed between fingers upon use in the preparation of a food dish. Consequently, the object of the present invention is to improve the state of the art and to provide culinary seasoning or bouillon tablets that have a minimal or no post-hardening effect once finished in production.

The object of the present invention is achieved by the subject matter of the independent claims. The dependent claims further develop the idea of the present invention.

Accordingly, the present invention provides in a first aspect a seasoning or bouillon tablet comprising salt, oil and/or fat and a culinary flavoring, characterized in that the tablet further comprises 5 to 25 dry wt% of a cereal bran.

In a second aspect, the invention relates a method for reducing post-hardening of a seasoning or bouillon tablet comprising the step of including 5 to 25 dry wt% of a cereal bran into a composition of said tablet.

A further aspect is the use of the seasoning or bouillon tablet of the present invention for preparing a culinary food product.

It has been surprisingly found by the inventors that when cereal bran material is incorporated into the recipe of making seasoning or bouillon tablets, tablets can be obtained which have a good, reasonable hardness for being industrially processed and commercially distributed, and at the same time those tablets had a significantly reduced post-hardening effect when for example being tested and exposed to cycles of humidity conditions, simulating frequently experienced environmental conditions products are exposed to in real market and private storage conditions. The results of those tests are provided in the Experimental section below.

### Brief Description of the Drawings

Figure 1: Hardening of bouillon cubes comprising different cereal brans.
Figure 2: Post-hardening of bouillon cubes comprising cereal brans.

### Detailed Description of the invention

The present invention provides in a first aspect a seasoning or bouillon tablet comprising salt, oil and/or fat and a culinary flavoring, characterized in that the tablet further comprises 5 to 25 dry wt% of a cereal bran. The seasoning or bouillon tablet is suitable for preparing a culinary food product. Such a culinary food product can be for example a soup, a consommé, a sauce for a meat dish, a sauce for a fish dish, or a sauce for a vegetable dish.

"Cereal bran" of the present invention is defined as the milling fraction from cereals containing pericarp, testa, aleurone layer, germ, and part of the starchy endosperm. Cereal brans are rich in dietary fibres and vital nutrients. A key component of the bran, the aleurone layer, is relatively high in ash, protein, total phosphorus, phytate phosphorus, fat, and niacin.

Preferably, the tablet according to the present invention comprises 5 to 10 dry wt% of a cereal bran.

In an embodiment of the present invention the cereal bran comprised in the tablet of the present invention is milled. Preferably, the cereal bran is dry milled. Typically, milling transforms the cereal bran into a more palatable form by reducing the particle size of the bran. Milling of the bran has the advantage that it e.g. improves the homogeneity of the final product, that it improves the mixing efficiency of the bran and the other ingredients, that it improves the binding ability between the different ingredients, that it improves the digestibility of the bran by the consumer. Milling preferably reduces the particle size of the cereal bran to below 1mm in diameter, more preferably to below 0.5mm in diameter, even more preferable to below 0.3mm in diameter.

In one embodiment of the present invention, the cereal bran is selected from the group consisting of rice bran, wheat bran, buckwheat bran, corn bran, oat bran, barley bran, or a combination thereof.

"Salt" of the present invention refers to any suitable alkali metal salt or mixture thereof typically used or useful for cooking in a kitchen in order to provide or improve the salty taste of a food product. The salt used in the composition of this invention comprises sodium chloride. In one embodiment of the present invention, salt is sodium chloride.

In a preferred embodiment, the tablet according to the present invention comprises sodium chloride in an amount of at least 35 wt%, even more preferably of at least 40 wt%.

"Oil and/or fat" refer to the standard oil and fat ingredients used in the food industry. "Fat" is typically an animal or vegetable fat. Preferably, the fat is selected from the group of chicken fat, beef fat, and hydrogenated vegetable fat. Oil is preferably selected from the group consisting of palm oil, palm olein, olive oil, corn oil, sunflower oil, rice bran oil, soybean oil and canola oil, or a combination thereof. Typically, the seasoning or bouillon tablet of the present invention may comprise between 1 and 25 wt% of an oil and/or fat composition.

The "culinary flavoring" of the present invention refer to at least one flavouring agent typically used in the preparation for making a culinary food product. In the tablet of the present invention, a culinary flavoring is preferably selected from the group consisting of herbs, spices, a vegetable, a meat or fish component, yeast extract, protein hydrolysate, or a combination thereof. Preferably, the vegetable, and the meat or fish component may be in the form of a powder.

In one further embodiment, the tablet of the present invention further comprises crystalline monosodium glutamate (MSG). Thereby, the MSG acts as a culinary, umami taste enhancer.

In a still further embodiment, the tablet of the present invention does not comprise maltodextrin. Generally, seasoning and bouillon tablets are produced today by making use of some maltodextrin. Maltodextrin has typically the function to act on one hand as a filler and on the other hand as a binder for providing the necessary texture and structure of the pressed seasoning and bouillon tablets. The inventors have now observed that by integrating a cereal bran into the recipe of making such culinary seasoning or bouillon tablets, the presence of maltodextrin is not required anymore. Hence, advantageously, the present invention also allows to reduce or to completely eliminate the use of maltodextrin from the composition of such products. Consequently, the number of ingredients, and particularly of processed ingredients, can be reduced. Such products are now better appreciated by consumers as they are perceived as more natural and comprising more natural and less processed ingredients.

In one preferred embodiment, the tablet of the present invention has a hardness of between 200 and 800 Newton. More preferably, the tablet of the present invention has a hardness of between 250 and 600 Newton. Even more preferably, the hardness is between 250 and 500 Newton. The advantage of a tablet having this specified hardness is that it is very convenient and easy to be handled and used by a consumer. The tablet can easily be removed from the packaging material, it can easily be handled without falling apart prematurely, and then the tablet has a hardness with makes it easy and convenient to be crumbled between the fingers of the consumer upon application of the tablet to a dish or into a pan. The hardness of a tablet can be tested with a mechanical tester such as for example a Zwick Z005 equipment with a cell load of 5 kN.

A second aspect of the present invention relates to a method for reducing post-hardening of a seasoning or bouillon tablet comprising the step of including 5 to 25 dry wt% of a cereal bran into a composition of said tablet. In a preferred embodiment, the method does not comprise a step of adding maltodextrin to the composition.

A third aspect of the present invention relates to a use of the seasoning or bouillon tablet according to the present invention for preparing a culinary food product. Preferably, the food product is a soup, a consommé, a sauce for a meat dish, a sauce for a fish dish, or a sauce for a vegetable dish.

Those skilled in the art will understand that they can freely combine all features of the present invention disclosed herein. In particular, features described for the product of the present invention may be combined with the method of the present invention and vice versa. Further, features described for different embodiments of the present invention may be combined.

Further advantages and features of the present invention are apparent from the figures and examples.

### Example 1: Hardening of bouillon cube with bran

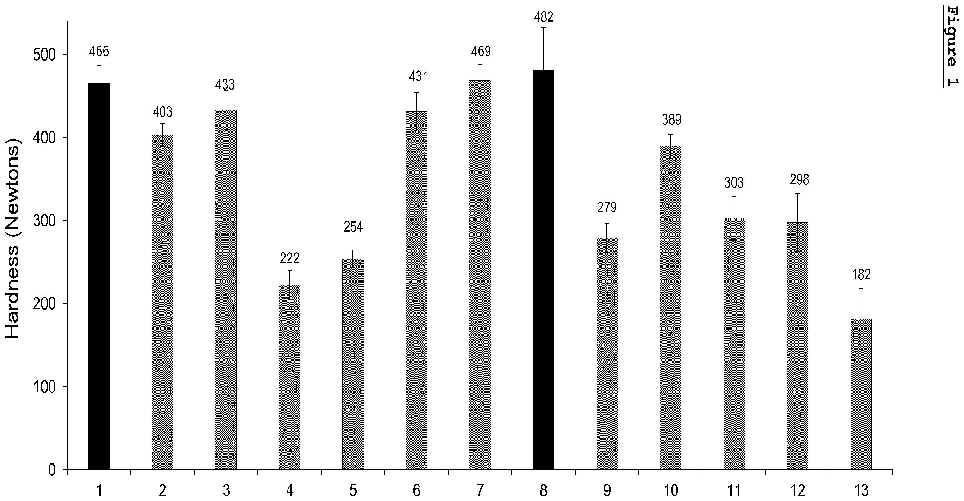

Bouillon cubes containing about (in total percent in weight) 50% of sodium chloride, 15% of monosodium glutamate, 5% palm oil, maltodextrin and starch as well as different vegetable pieces and herb leaves, spices and flavors were prepared in plastic containers through manual mixing following the composition presented in Table 1 for starch, maltodextrin, and bran (in total percent in weight). The resulting bouillon mass was left for 1 h in a closed container at room temperature to allow proper moisture distribution before cube formation. Cubes were then prepared using a tailor-made die coupled to a mechanical tester type Zwick Z005 equipped with a 5 kN load cell. Constant cube weight of 4 ± 0.01 g and length of edges of 13.1 mm were used. The result of the hardness of the cubes tested is shown in Figure 1.

**Table I: Composition of the Samples**

| **Samples** | **% Starch** | **% Maltodextrin** | **% Bran** |
|---|---|---|---|
| 1 | 7.8 | 0 | 0 |
| 2 | 0 | 0 | 7.8 (Oat) |
| 3 | 0 | 0 | 7.8 (Buckwheat) |
| 4 | 0 | 0 | 7.8 (Wheat) |
| 5 | 0 | 0 | 7.8 (Rice) |
| 6 | 0 | 0 | 7.8 (Corn) |
| 7 | 0 | 0 | 7.8 (Malted Barley) |
| 8 | 6.2 | 2.7 | 0 |
| 9 | 0 | 0 | 8.9 (Oat) |
| 10 | 0 | 0 | 8.9 (Buckwheat) |
| 11 | 0 | 0 | 8.9 (Wheat) |
| 12 | 0 | 0 | 8.9 (Rice) |
| 13 | 0 | 0 | 8.9 (Corn) |

As can be seen in Figure 1, surprisingly it was found that the resulting hardness of the bouillon cubes containing bran of different cereal origin as replacement of starch and maltodextrin (Samples 2-7 and Sample 9-13) resembled the hardness of the original reference cubes (Samples 1 and 8). The observed hardness of the Samples 4 and 5 was slightly lower than reference Sample 1, but still acceptable. Similarly, Samples 9-13 showed somewhat lower hardness than the reference Sample 8, but were also still acceptable.

### Example 2: Post-hardening of bouillon cubes

Bouillon cubes were prepared according to the composition presented in Table 2 and following the mixing procedure described in Example 1. The resulting bouillon cubes were placed in a sorption test instrument type SPS from ProUmid to assess the hardness upon exposing the cubes to different humidity conditions that typically lead to post-hardening (hardening increase to unacceptable levels). An average of 5 cubes were kept at 25 °C during 72 h to 60% RH followed by 30% RH for 72 h. Subsequently, the cube hardness (breakage force) was measured using a mechanical testers type Zwick Z005 equipped with a 5 kN load cell through a compression test performed at a constant compression speed of 1.0 mm/s. Breaking force was taken at the maximum of the force measure during the compression test.

**Table 2: Composition of the Samples**

| **Compositions** | **% Maltodextrin** | **% Starch** | **% Bran** |
|---|---|---|---|
| 1 | 2.7 | 6.2 | 0 |
| 2 | 0 | 0 | 8.9 (Buckwheat) |
| 3 | 0 | 0 | 8.9 (Oat) |
| 4 | 0 | 0 | 8.9 (Wheat) |

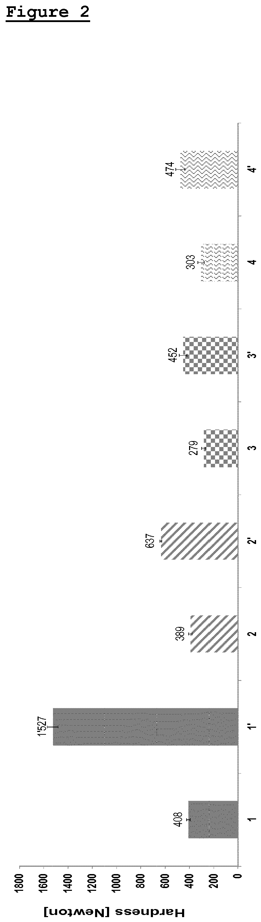

The result of the hardness and post-hardening test are shown in Figure 2. Thereby, the Samples 1 to 4, corresponding to the compositions 1-4 respectively, were stored and the hardness measured under the same conditions as in Example 1. And the Samples 1' to 4', corresponding to the compositions 1-4 respectively, were exposed to humidity cycles as described in this Example above.

The results presented in Figure 2 show the effect of bran to sustain the desired value of hardening in cubes after exposition to a cycle of humidity conditions that resembles to environmental conditions frequently experienced for product in the market and therefore well simulates long-term storage of such products in real market situations. Overall, the rise in post-hardening experienced by the reference sample 1 (see Sample 1' versus Sample 1) was much significantly reduced in recipes containing brans (see Sample 2' versus Sample 2; Sample 3' versus Sample 3; and Sample 4' versus Sample 4). Consequently, these results show that the presence of a cereal bran in a seasoning or bouillon tablet significantly reduces the post-hardening effect in comparison to reference samples not comprising any cereal brans.

## Claims

1. A seasoning or bouillon tablet comprising salt, oil and/or fat and a culinary flavoring, **characterized in that** the tablet further comprises 5 to 25 dry wt% of a cereal bran.

2. The tablet according to claim 1 comprising 5 to 10 dry wt% of a cereal bran.

3. The tablet according to claim 1 or 2, wherein the cereal bran is milled.

4. The tablet according to one of the above claims, wherein the cereal bran is selected from the group consisting of rice bran, wheat bran, buckwheat bran, corn bran, oat bran, barley bran, or a combination thereof.

5. The tablet according to one of the above claims, wherein salt is sodium chloride and is comprised in an amount of at least 35 wt%.

6. The tablet according to one of the above claims, wherein the culinary flavoring is selected from the group consisting of herbs, spices, vegetable powder, meat or fish component, yeast extract, protein hydrolysate, or a combination thereof.

7. The tablet according to one of the above claims, further comprising crystalline monosodium glutamate (MSG).

8. The tablet according to one of the above claims, wherein the seasoning or bouillon tablet does not comprise maltodextrin.

9. The tablet according to one of the above claims, having a hardness of between 200 and 800 Newton.

10. A method for reducing post-hardening of a seasoning or bouillon tablet comprising the step of including 5 to 25 dry wt% of a cereal bran into a composition of said tablet.

11. The method according to claim 10, wherein the method does not comprise a step of adding maltodextrin to the composition.

12. Use of the seasoning or bouillon tablet according to one of the claims 1-9 for preparing a culinary food product.

13. The use according to claim 12, wherein the food product is a soup, a consommé, a sauce for a meat dish, a sauce for a fish dish, or a sauce for a vegetable dish.

## Patentansprüche

1. Würz- oder Bouillontablette, die Salz, Öl und/oder Fett und einen kulinarischen Geschmacksstoff umfasst, **dadurch gekennzeichnet, dass** die Tablette ferner zu 5 bis 25 Trockengew.-% Getreidekleie umfasst.

2. Tablette nach Anspruch 1, die zu 5 bis 10 Trockengew.-% Getreidekleie umfasst.

3. Tablette nach Anspruch 1 oder 2, wobei die Getreidekleie gemahlen ist.

4. Tablette nach einem der vorstehenden Ansprüche, wobei die Getreidekleie ausgewählt ist aus der Gruppe bestehend aus Reiskleie, Weizenkleie, Buchweizenkleie, Maiskleie, Haferkleie, Gerstenkleie oder einer Kombination davon.

5. Tablette nach einem der vorstehenden Ansprüche, wobei Salz Natriumchlorid ist und in einer Menge von mindestens 35 Gew.-% enthalten ist.

6. Tablette nach einem der vorstehenden Ansprüche, wobei der kulinarische Geschmacksstoff ausgewählt ist aus der Gruppe bestehend aus Kräutern, Gewürzen, Pflanzenpulver, Fleisch- oder Fischkomponente, Hefeextrakt, Proteinhydrolysat oder einer Kombination davon.

7. Tablette nach einem der vorstehenden Ansprüche, die ferner kristallines Mononatriumglutamat (MSG) umfasst.

8. Tablette nach einem der vorstehenden Ansprüche, wobei die Würz- oder Bouillontablette kein Maltodextrin umfasst.

9. Tablette nach einem der vorstehenden Ansprüche, die eine Härte zwischen 200 und 800 Newton aufweist.

10. Verfahren zum Reduzieren des Nachhärtens einer Würz- oder Bouillontablette, das den Schritt des Einschließens von 5 bis 25 Trockengew.-% einer Getreidekleie in eine Zusammensetzung der Tablette umfasst.

11. Verfahren nach Anspruch 10, wobei das Verfahren keinen Schritt des Hinzufügens von Maltodextrin zu der Zusammensetzung umfasst.

12. Verwendung der Würz- oder Bouillontablette nach einem der Ansprüche 1 bis 9 zur Herstellung eines kulinarischen Lebensmittelprodukts.

13. Verwendung nach Anspruch 12, wobei das Lebensmittelprodukt eine Suppe, eine Kraftbrühe, eine Sauce für ein Fleischgericht, eine Sauce für ein Fischgericht oder eine Sauce für ein Gemüsegericht ist.

## Revendications

1. Tablette d'assaisonnement ou de bouillon comprenant du sel, de l'huile et/ou de la matière grasse et un arôme culinaire, **caractérisée en ce que** la tablette comprend en outre de 5 à 25 % en poids sec d'un son de céréale.

2. Tablette selon la revendication 1 comprenant de 5 à 10 % en poids sec d'un son de céréale.

3. Tablette selon la revendication 1 ou 2, dans laquelle le son de céréale est broyé.

4. Tablette selon l'une des revendications précédentes, dans laquelle le son de céréale est choisi dans le groupe constitué de son de riz, son de blé, son de sarrasin, son de maïs, son d'avoine, son d'orge, ou une combinaison de ceux-ci.

5. Tablette selon l'une des revendications précédentes, dans laquelle le sel est le chlorure de sodium et est compris en une quantité d'au moins 35 % en poids.

6. Tablette selon l'une des revendications précédentes, dans laquelle l'arôme culinaire est choisi dans le groupe constitué d'herbes, épices, poudre de légumes, composant de viande ou de poisson, extrait de levure, hydrolysat de protéine, ou une combinaison de ceux-ci.

7. Tablette selon l'une des revendications précédentes, comprenant en outre du glutamate monosodique (MSG) cristallin.

8. Tablette selon l'une des revendications précédentes, dans laquelle la tablette d'assaisonnement ou de bouillon ne comprend pas de maltodextrine.

9. Tablette selon l'une des revendications précédentes, ayant une dureté comprise entre 200 et 800 Newton.

10. Procédé de réduction du post-durcissement d'une tablette d'assaisonnement ou de bouillon comprenant l'étape d'inclusion de 5 à 25 % en poids sec d'un son de céréale dans une composition de ladite tablette.

11. Procédé selon la revendication 10, dans lequel le procédé ne comprend pas d'étape d'ajout de maltodextrine à la composition.

12. Utilisation de la tablette d'assaisonnement ou de bouillon selon l'une des revendications 1 à 9 pour la préparation d'un produit alimentaire culinaire.

13. Utilisation selon la revendication 12, dans laquelle le produit alimentaire est une soupe, un consommé, une sauce pour un plat de viande, une sauce pour un plat de poisson, ou une sauce pour un plat de légumes.
